# EUROPEAN PATENT APPLICATION

(11) **EP 1 279 468 A1**
(43) Date of publication of application: **29.01.2003**
(21) Application number: 01129405.5
(22) Date of filing: 10.12.2001
(51) Int. Cl.: B25J 9/10

(54) **Robot articulation with a two-stage gear reducer**

(30) Priority: 27.07.2001 IT TO010744
(71) Applicant: COMAU S.p.A., 10095 Grugliasco (Torino) (IT)
(72) Inventor: Amparore, Mauro, 10095 Grugliasco (Torino) (IT); Mauletti, Enrico, 10095 Grugliasco (Torino) (IT); Paparella, Giuseppe, 10095 Grugliasco (Torino) (IT); Pernechele, Giorgio, 10095 Grugliasco (Torino) (IT)
(74) Representative: Notaro, Giancarlo

(57) **Abstract**

A robot articulation comprises a supporting enclosure (2), which can be fixed to a first robot element (1), a body (5) for attaching a second robot element, rotationally mounted in the supporting structure (2) on an articulation axis (4) and a gear reducer transmission for connecting a drive shaft (9) associated to said first robot (1) element to said body (5) for attaching the second robot element. Said reducer transmission comprises only one first simple reduction stage (A) and a second epicyclic reduction stage (B).

## Description

The invention relates to industrial robot articulations, of the type comprising:
- a supporting enclosure, which can be fixed to a first robot element,
- a body for attaching a second robot element, rotationally mounted in the supporting structure on an articulation axis,
- a gear reducer transmission for connecting a drive shaft associated to said first robot element to said body for attaching the second robot element.

The object of the invention is to make a robot articulation of the type specified above capable of producing a high reduction ratio in the transmission of movement of the drive shaft to the attachment body of the second element whose structure has reduced weight and dimensions.

In order to achieve this object, the invention relates to a robot articulation having the characteristics mentioned above and characterised in that said gear reducer transmission comprises only two reduction stages, specifically:
- one first simple reduction stage comprising a smaller diameter first gear, mounted on the drive shaft and a larger diameter second gear rotationally mounted in the supporting enclosure on said articulation axis, and
- a second epicyclic reduction stage comprising:
   - a crown gear acting as a sun gear, fastened to the supporting enclosure whose axis coincides with the articulation axis,
   - a gear set unit rotatonally mounted in the supporting enclosure on said articulation axis and rigidly connected to said second larger diameter gear,
   - a plurality of first satellite gears freely and rotationally mounted on said gear set unit on respective peripheral axes and meshing said first crown gear acting as a sun gear,
   - a plurality of second satellite gears rotationally and coaxially connected to one of said first satellite gears and meshing a second crown gear, whose axis coincides with the articulation axis and which is rigidly connected to the attachment body of the second robot element,
   - said articulation being also characterised in that said second larger diameter gear of the first reduction stage is removably fixed to the gear set unit.
- Thanks to the aforesaid characteristics, the robot articulation according to the invention is capable of achieving a high reduction ratio of motion transmission from the drive shaft to the driven unit with a structure whose weight and dimensions are reduced. The first reduction stage can be easily replaced, thanks to the removable connection between said second gear and the gear set unit.

With respect to prior art solutions requiring a higher number of reduction stages, the wrist according to the invention ensures a high number of meshing teeth, thanks to the high number of satellite gears, a considerable fluidity of movement, a high stiffness of transmission and, finally, very compact overall dimensions.

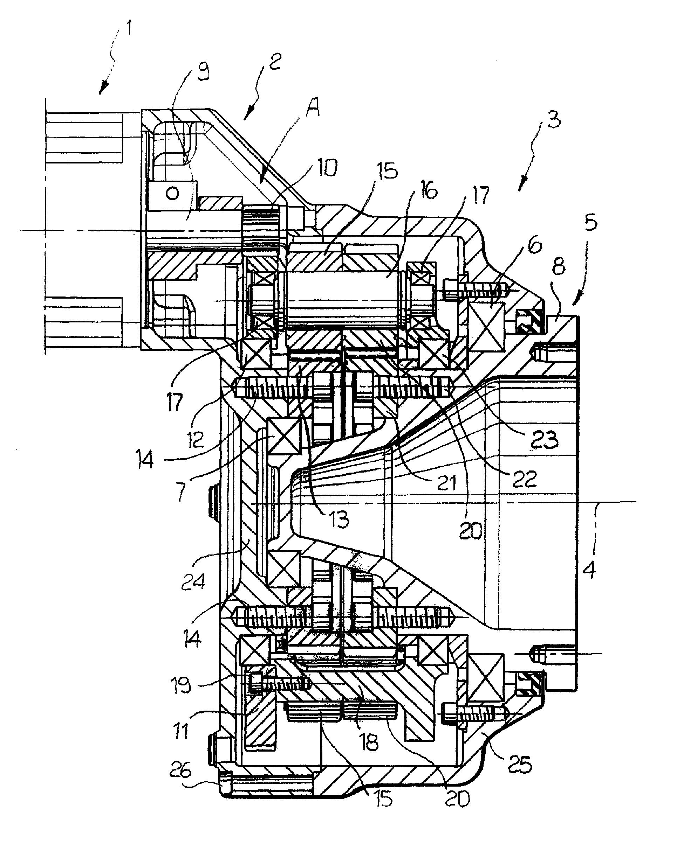

Additional characteristics and advantages of the invention will now be described, by the way of example only, with reference to the accompanying drawing illustrating a section of a preferred embodiment of the robot wrist according to the invention.

In the drawing, numeral 1 indicates the body of an electrical motor mounted on the end of a robot arm (partially visible in the figure) to which the enclosure 2 supporting the articulation according to the invention is ensured, the articulation being in the illustrated case a robot wrist, generally indicated with reference numeral 3. The supporting enclosure 2 rotationally supports a body 5 on an articulation axis 4 by means of two rolling bearings 6, 7, the body 5 comprising a flange 8 for attaching a tool. Obviously, if the articulation of the invention is not used as a wrist, the body 5 is connected to a second element of the cinematic chain forming the structure of the robot. For example, the device according to the invention can be used in correspondence of the articulation between two arms of the robot or, more in general, in correspondence of any robot axis.

Reference numeral 9 indicates the shaft of the electrical motor 1 destined to cause the rotation of the attachment body 5 of the tool on the articulation axis 4. The rotary movement of the drive shaft 9 is transformed into the rotary movement of the body 5 by means of a geared transmission comprising a first simple reduction stage A and a second epicyclic reduction stage B.

The first simple reduction stage A comprises a small sized pinion 10, coaxially arranged with respect to the shaft 9 and rigidly connected to the shaft, as well as a larger diameter gear 11, which is rotationally mounted by means of bearing 12 over the supporting enclosure 2 and meshes the pinion 10.

The second epicyclic reduction stage B comprises a first crown gear 13, acting as a sun gear, which is rigidly connected by means of screws 14 to the supporting casing 2. The satellite gears 14 of a first circumferential set of satellite gears, each rigidly fitted on a shaft 16, rotationally mesh the first crown gear 13.

The ends of each shaft 16 are freely and rotationally mounted on the structure of a gear set unit 18 by means of bearings 17, the gear set unit being rigidly connected to the larger diameter crown gear 11 of the first reduction stage by means of screws 19.

Furthermore, the satellite gears 20 of a second set of satellite gears mesh a second crown gear 21, which is coaxial to the body 5, and rigidly connected to it by means of the screw 22, and are rigidly fitted on the peripheral shafts 16 of the gear set unit 18. The structure of the gear set unit 18 is rotationally mounted in the supporting enclosure 2 on the articulation axis 4 by means of the aforesaid bearing 12 and an additional bearing 23.

The structure of the supporting enclosure 2 essentially presents a rear support 24 and a front support 25, reciprocally connected by means of screws 26 and defining a cavity in which the various units of the structure described above are arranged.

In operation, the rotation of the drive shaft 9 is transmitted with a first reduction ratio to the larger diameter crown gear 11, which causes a rotation of the articulation axis 4 of the gear set unit 18, which is solidly fastened to it. The rotation of the gear set unit 18 on the axis 4 causes the rotation of the first set of satellite gears 15 on the first crown gear 13, which is fastened to the supporting enclosure 2. The satellite gears 15 thus generate a rotation of the respective shafts 16, which is transmitted to the satellite gears of the second set 20. The latter in turn causes the rotation of the second crown gear 21 meshing the satellite gears on the axis 4, said rotation being consequently transmitted to the body 5 which is rigidly connected to the flange 21.

As appears from the description, the robot wrist according to the invention consists of two only reduction stages, precisely a first simple reduction stage and a second epicyclic reduction stage.

Thanks to the particular structure described above, the dimensions of the wrist are more compact, despite the high transmission ratio which is obtained. The high number of meshing teeth due to the presence of a high number of satellites 15, 20 ensures increased fluidity of movement and rigidity of transmission.

Naturally, numerous changes can be implemented to the construction and embodiments of the invention herein envisaged without departing from the scope of the present invention, as defined by the following claims.

## Claims

1. Robot articulation, comprising:
- a supporting enclosure (2), which can be fixed to a first robot element (1),
- a body (5) for attaching a second robot element, rotationally mounted in the supporting structure (2) on an articulation axis (4),
- a gear reducer transmission for connecting a drive shaft (9) associated to said first robot (1) element to said body (5) for attaching the second robot element,
**characterised in that** said gear reducer transmission comprises only two reduction stages, specifically:
- one first simple reduction stage (A) comprising a smaller diameter first gear (10), mounted on the drive shaft (9) and a larger diameter second gear (11) rotationally mounted in the supporting enclosure (2) on said articulation axis (4), and
- a second epicyclic reduction stage (B) comprising:
- a crown gear (13) acting as a sun gear, fastened to the supporting enclosure (2) whose axis coincides with the articulation axis (4),
- a gear set unit (18) rotationally mounted in the supporting enclosure (2) on said articulation axis (4) and rigidly connected to said second larger diameter gear (11),
- a plurality of first satellite gears (15) freely and rotationally mounted on said gear set unit (18) on respective peripheral axes and meshing said first crown gear (13) acting as a sun gear,
- a plurality of second satellite gears (20) rotationally and coaxially connected to one of said first satellite gears (15) and meshing a second crown gear (21), whose axis coincides with the articulation axis (4) and which is rigidly connected to the attachment body (5),
- said articulation (3) being also **characterised in that** said second larger diameter gear (11) of the first reduction stage is removably fixed to the gear set unit (18).

2. Robot articulation according to claim 1, **characterised in that** said first crown gear (13) is fixed to the supporting enclosure (2) by means of screws (14).

3. Robot articulation according to claim 1, **characterised in that** said second crown gear (21) is fixed to said body (5) by means of screws (22).

4. Robot articulation according to claim 1, **characterised in that** each pair consisting of one of said first satellite gears (15) and one of said second satellite gears (20) is rigidly fitted on a shaft (16) freely and rotationally mounted on the end of the gear set unit (18).
